# EUROPEAN PATENT SPECIFICATION

(11) **EP 2 290 875 B1**
(45) Date of publication and mention of the grant of the patent: **01.03.2017**
(21) Application number: 08874669.8
(22) Date of filing: 29.12.2008
(51) Int. Cl.: H04W 12/04, H04L 12/64, H04W 36/12, H04W 36/00

(54) **GENERATING METHOD AND SYSTEM FOR KEY IDENTITY IDENTIFIER AT THE TIME WHEN USER DEVICE TRANSFERS**
ERZEUGUNGSVERFAHREN UND -SYSTEM FÜR SCHLÜSSELIDENTITÄTSKENNUNG ZUM ZEITPUNKT, WENN SICH DIE BENUTZEREINRICHTUNG TRANSFERIERT
PROCÉDÉ ET SYSTÈME DE GÉNÉRATION D'IDENTIFIANT D'IDENTITÉ DE CLÉ LORS DU TRANSFERT DU DISPOSITIF UTILISATEUR

(30) Priority: 16.06.2008 CN 200810100472
(43) Date of publication of application: 02.03.2011
(73) Proprietor: ZTE Corporation, Shenzhen, Guangdong 518057 (CN)
(72) Inventor: ZHANG, Xuwu, Shenzhen Guangdong 518057 (CN); GAN, Lu, Shenzhen Guangdong 518057 (CN); HUANG, Qing, Shenzhen Guangdong 518057 (CN)
(74) Representative: Israelsson, Stefan
(86) International application number: PCT/CN2008/002116
(87) International publication number: WO 2009/152656

(56) References cited:
- EP-A2- 1 841 267
- WO-A1-2007/025487
- WO-A1-2009/133441
- WO-A2-2007/077483
- CN-A- 1 756 427
- CN-A- 101 102 600
- CN-A- 101 299 666
- CN-A- 101 299 884
- "Security Architecture", 3GPP TS 33.401 V2.0.0,, 1 May 2008 (2008-05-01), XP008145623,
- '"Security Architecture"' 3GPP TS 33.401 V2.0.0 May 2008, pages 33 - 39, XP008145623

## Description

### TECHNICAL FIELD

The present invention relates to the field of mobile telecommunications, particularly to a method and system for generating a key identity identifier when a user equipment transfers.

### BACKGROUND

When a user equipment (UE) transfers among different access systems in a mobile telecommunications system, security parameters of a source service network are required to be mapped into those capable of being recognized and used by a target service network, so that the UE can transfer successfully and develop services. These security parameters include a key, a key identifier, a counter, a security algorithm, etc.

A 3GPP evolved packet system (EPS) consists of an evolved UMTS terrestrial radio access network (EUTRAN) and an evolved packet core (EPC) network.

Wherein the EPC network comprises a mobility management entity (MME), which is responsible for tasks related to a control surface, e.g., management of mobility, processing of non-access stratum signaling, and management of the user-side safe mode, etc.; wherein the MME stores a root key K_{ASME} (Access Security Management Entity Key) of the EUTRAN, and generates a root key K_{eNB} (eNB Key) of an access stratum for an evolved Node B (eNB) based on the K_{ASME} and an uplink non-access stratum sequence number (NAS SQN). A key set identifier for access security management entity (KSI_{ASME}) is an identity identifier (or key sequence number) of the K_{ASME}, and the KSI_{ASME} is 3-bits long and is used for identification and retrieval of a key between a network and a user equipment (UE). When connecting the UE with the network, according to the KSI_{ASME}, an opposite party may be notified to use a specified key which has been stored to establish security context without need of authentication and key association (AKA), network resources thus can be saved. When the key needs to be deleted due to termination of its lifetime or other causes, the KSI_{ASME} is set to "111" by the UE.

Wherein a base station device in the EUTRAN is an evolved Node B (eNB), and is mainly responsible for radio communications, radio communication management and mobility context management.

In a 3GPP universal mobile telecommunications system (UMTS), a serving GPRS support node (SGSN) is a device responsible for management of mobility context in the packet domain and/or management of the user-side safe mode. The SGSN is also responsible for the authentication and security management of a universal terrestrial radio access network (UTRAN) in the UMTS, and for storing an integrity key (IK) and a ciphering key (CK). A key identity identifier of the CK/IK is a key set identifier (KSI) whose function and use are similar to those of the KSI_{ASME} in the EPS, both of which are used for identification and retrieval of keys between a UE and a network, and the KSI is 3-bits long. When the KSI equals 111, it means that there is no usable key and the KSI is invalid. When it is necessary for the UE and the SGSN to establish a UMTS security connection through key association, if a usable key has been stored in the UE, then the UE sends the stored KSI to the SGSN which verifies whether the stored KSI is identical with the KSI stored in the UE, if yes, then the stored key set is used to establish security context through key association and the KSI is sent back to the UE to confirm the key that the UE uses; if no usable key is stored in the UE, then the KSI is set to 111 and is sent to the SGSN, and the SGSN, after detecting the KSI to be 111, sends an authentication request message to a home location register (HLR)/home subscriber server (HSS), and the UE and the network perform AKA for a second time and generate a new key set.

The SGSN is also a device responsible for management of mobility context in the packet domain and/or management of the user-side safe mode in a general packet radio service (GPRS)/enhanced data rates for GSM evolution (EDGE) system. The SGSN is responsible for the authentication and security management of a GPRS/EDGE radio access network (GERAN), and for storing a ciphering key (Kc) of the GERAN; an identity identifier (or key identity identifier) of the Kc is a ciphering key sequence number (CKSN) whose function and use are the same as those of the KSI.

When a UE transfers from an EUTRAN to a UTRAN, an MME generates a CK and an IK for a target service network based on a K_{ASME}, and sends the CK and the IK to an SGSN, then the UE and the SGSN use the CK and the IK to establish UTRAN security context by negotiating corresponding security algorithms; there are two types of transferring, including transferring when RRC (radio resource control) is in an active state and transferring when the UE is in an idle state, wherein the former includes switching, etc., and the latter includes route area update request, route area attachment request, etc.

When the UE transfers to a GERAN from the EUTRAN, the MME generates a CK and an IK based on the K_{ASME} (the method of which is the same as that of transferring to the UMTS), and sends the CK and the IK to an SGSN. The SGSN generates a Kc of the GERAN based on the IK and the CK.

In the prior art, a KSI_{ASME}, a KSI and a CKSN are all generated by a network side during authentication, and are sent to a UE through an authentication request message. In a process of transferring from an EUTRAN to a UTRAN or a GERAN, although an MME generates an IK and a CK needed by the UTRAN or the GERAN for a target service network, no identity identifier corresponding to the pair of keys is generated, after transfer termination the UE and the SGSN are not capable of retrieving the keys generated during transferring, and therefore, the pair of keys cannot be used. When the UE and the network need to re-establish radio resource control (RRC) or other connections, new keys have to be generated through AKA before establishing a radio connection, because those stored keys cannot be used. This undoubtedly increases the signaling overhead of both the network and the UE and delays the time of normal communication between the UE and the network, resulting in deterioration of user satisfaction.

EP 1 841 267 A2 discusses a system and method for optimizing authentication procedure during inter access system handovers.

3GPP TS 33.401 v2.0.0 (2008-05) discusses a 3GPP system architecture evolution (SAE).

### SUMMARY

The present invention mainly aims to provide a method and system for generating a key identity identifier when a user equipment transfers, which is capable of solving the problem in the prior art that a key mapped from a K_{ASME} in a transfer process has no identity identifier after a user equipment transfers from an EUTRAN to a UTRAN or a GERAN.

The present invention is directed to subject-matter as disclosed in the appended claims.

The technical scheme of the present invention can provide a key with an identity identifier in a transfer process, to reuse a key generated from a K_{ASME}, thereby solving the problem that the key generated from the K_{ASME} cannot be reused due to lack of an identity identifier when a UE transfers from an EUTRAN to another system, thus reducing interactive signaling between the UE and the network.

### BRIEF DESCRIPTION OF THE DRAWINGS

The drawings to be described here are used to facilitate further understanding and constitute part of this application. The implementation examples of the present invention and the description thereof are used for explanation of the present invention, and shall not be construed as improper limitation to the present invention. In the drawings,
Fig. 1 is a schematic diagram illustrating a method for generating a KSI when a UE transfers from an EUTRAN to a UTRAN in the present invention;
Fig. 2 is a schematic diagram illustrating a method for generating a KSI when a UE transfers from an EUTRAN to a GERAN in the present invention;
Fig. 3 is a flowchart of realizing signaling of Application Example One of the method in the present invention;
Fig. 4 is a flowchart of realizing signaling of Application Example Two of the method in the present invention;
Fig. 5 is a flowchart of realizing signaling of Application Example Three of the method in the present invention;
Fig. 6 is a flowchart of realizing signaling of Application Example Four of the method in the present invention;
Fig. 7 is a flowchart of realizing signaling of Application Example Five of the method in the present invention; and
Fig. 8 is a flowchart of realizing signaling of Application Example Six of the method in the present invention.

### DETAILED DESCRIPTION

The technical scheme of the invention will be further described in details based on the drawings and embodiments.

A method for generating a key identity identifier when a UE transfers in the present invention includes the following steps:
when a UE transfers from an EUTRAN to a target system, an MME sends an identity identifier of a K_{ASME} (KSI_{ASME}) to an SGSN, and both the SGSN and the UE map the KSI_{ASME} into a key identity identifier of the target system.

Wherein the mapping method may include the following steps: directly assigning the KSI_{ASME} to the key identity identifier of the target system, or directly assigning the sum of the KSI_{ASME} and a constant to the key identity identifier of the target system; and
the SGSN and the UE agree on the mapping method and the constant.

Wherein the mapping method also includes the following step: the UE and the SGSN store the key identity identifier of the target system acquired from mapping together with the key of the target system generated from the K_{ASME}.

Wherein the sum of the KSI_{ASME} and the constant can not be 111, otherwise, it may be altered according to the agreement between the UE and the SGSN, e.g. by replacing it with a next value 000 or another value.

Wherein if the UE and the SGSN have agreed on a key before transferring and the stored key identity identifier of the target system is the same as the key identity identifier of the target system mapped from the KSI_{ASME} during transferring, then the key stored before transferring is deleted.

Wherein transferring of the UE from the EUTRAN to another radio access system means transferring of the UE to a UTRAN system or a GERAN system; and there are two types of transferring: idle transferring and switching.

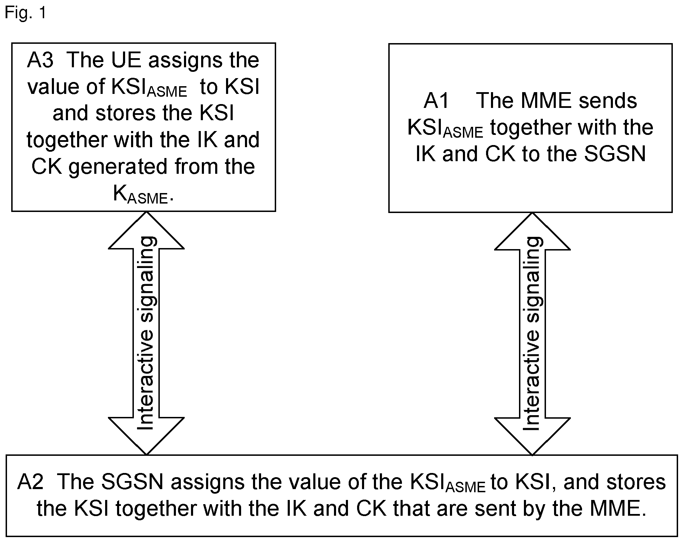

When the UE transfers in an idle state from the EUTRAN to a UTRAN, the generating method, as shown in Fig. 1, comprises the following specific steps:
A1: after receiving a context request message or an identification request message, an MME generates an IK and a CK based on the K_{ASME} and sends the KSI_{ASME} together with the IK and the CK which are generated from the K_{ASME} to the SGSN through a context response message or an identification response message;
A2: after receiving the KSI_{ASME}, the IK and the CK from the MME, the SGSN maps the KSI_{ASME} into a KSI, and stores the KSI, the IK and the CK together; and the SGSN sends a message of indicating mapping completion of the KSI to the UE; and
A3: the UE maps the KSI_{ASME} into a KSI, i.e., assigning the value of the KSI_{ASME} to the KSI: KSI=KSI_{ASME}, and stores the KSI together with the IK and the CK which are generated from the K_{ASME}.

Further, the following step is included before step A1:
A0: the UE decides to transfer to a UTRAN in an idle state, and sends the SGSN a request message of idle transferring to the UTRAN, wherein the request message is a route area update request message or a route area attachment request message; after receiving the request message of idle transferring to the UTRAN which is sent from the UE, the SGSN sends a corresponding request message to the MME.

Further, correspondingly, in step A2, the message of indicating mapping completion of the KSI sent by the SGSN is a route area update acceptance message or a route area attachment acceptance message.

Further, step A3 may take place in any step after the UE decides to transfer to the UTRAN in an idle state and before the UE sends a corresponding route area update completion message or route area attachment completion message to the SGSN.

When the UE switches from the EUTRAN to a UTRAN, the specific steps of the generating method are as follows:
a1: after receiving a switching request message, the MME generates an IK and a CK based on the K_{ASME}, and sends the KSI_{ASME} together with the IK and the CK which are generated from the K_{ASME} to the SGSN through a forward and redirect request message;
a2: after receiving the KSI_{ASME}, the IK and the CK from the MME, the SGSN maps the KSI_{ASME} into a KSI, and stores the KSI, the IK and the CK together; the SGSN sends a forward and redirect response message of indicating mapping completion of the KSI to the MME; and the MME sends a switching command to instruct the UE to switch; and
a3: after receiving the switching command from the network, the UE maps the KSI_{ASME} into a KSI, and stores the KSI together with the IK and the CK which are generated from the K_{ASME}.

The above-mentioned method for generating a KSI maps a value of a KSI_{ASME} in the EUTRAN into a value of a KSI in the UTRAN, and guarantees that the KSI acquired through mapping and a previously stored key sequence number do not repeat, thus solving the problem in the prior art that an IK and a CK acquired through mapping cannot be reused due to lack of identity identifiers when a UE transfers from an EUTRAN to a UTRAN.

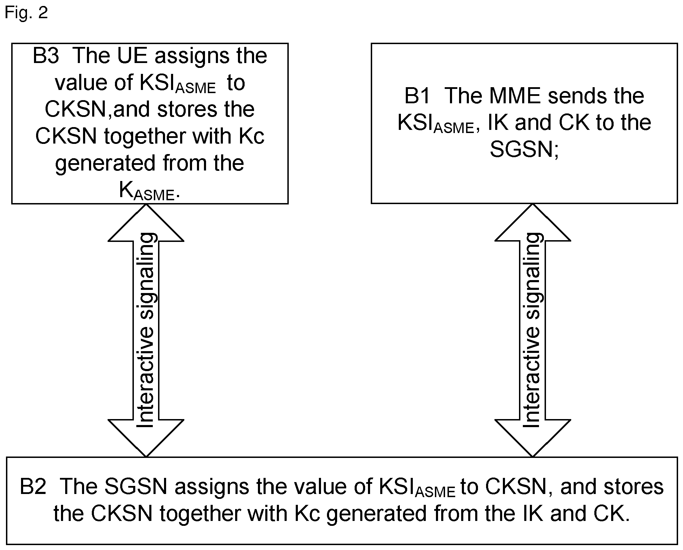

When the UE transfers in an idle state from the EUTRAN to a GERAN, the generating method, as shown in Fig. 2, comprising specific steps as follows:
B1: after receiving a context request or an identification request message, the MME generates an IK and a CK based on the K_{ASME}, and sends the KSI_{ASME} together with the IK and the CK which are generated from the K_{ASME} to the SGSN through a context response message or an identification response message;
B2: after receiving the KSI_{ASME}, the IK and the CK from the MME, the SGSN generates a Kc based on the IK and the CK, maps the KSI_{ASME} into a CKSN, and stores the CKSN together with the Kc generated from the IK and the CK; and the SGSN sends the UE a message of indicating mapping completion of the CKSN; and
B3: the UE maps the KSI_{ASME} into a CKSN, and stores the CKSN together with the Kc generated from the K_{ASME}.

Further, the following step is included before step B1:
B0: the UE decides to transfer to a GERAN in an idle state, and sends the SGSN a request message of idle transferring to the UTRAN, wherein the request message is a route area update request message or a route area attachment request message; after receiving the request message of idle transferring to the UTRAN which is sent from the UE, the SGSN sends a corresponding request message to the MME.

Correspondingly, in step B2, the message of indicating mapping completion of the CKSN sent by the SGSN is a route area update acceptance message or a route area attachment acceptance message.

Further, step B3 may take place in any step after the UE decides to transfer to the GERAN in an idle state and before the UE sends a corresponding switching message to a network side.

When the UE switches from the EUTRAN to a CERAN, the specific steps of the generating method are as follows:
b1: after receiving a switching request message, the MME generates an IK and a CK based on the K_{ASME}, and sends the KSI_{ASME} together with the IK and the CK which are generated from the K_{ASME} to the SGSN through a forward and redirect request message;
b2: after receiving the KSI, the IK and the CK from the MME, the SGSN generates a Kc based on the IK and CK, maps the KSI_{ASME} into a CKSN, and stores the CKSN together with the Kc generated from the IK and the CK; the SGSN sends a message of indicating mapping completion of the CKSN to the MME; and the MME sends a switching command to instruct the UE to switch; and
b3: after receiving the switching command from the network, the UE maps the KSI_{ASME} into a CKSN, and stores the CKSN together with the Kc generated from the K_{ASME}.

The above-mentioned generating method for a KSI maps a value of a KSI_{ASME} into a value of a CKSN, and guarantees that the CKSN and a previously stored key sequence number do not repeat, thus solving the problem in the prior art that a Kc acquired through mapping cannot be reused due to lack of identity identifiers when a UE transfers from an EUTRAN to a GERAN.

A system for generating a key identity identifier when a UE transfers in the present invention includes a UE, an MME and an SGSN;
the MME is used for sending a KSI_{ASME} to the SGSN when the UE transfers from an EUTRAN to a target system; and
both the SGSN and the UE are used for mapping the KSI_{ASME} into a key identity identifier of the target system;
wherein the SGSN/UE may perform mapping in the following method: directly assigning the KSI_{ASME} to the key identity identifier of the target system, or directly assigning the sum of the KSI_{ASME} and a constant to the key identity identifier of the target system;
the SGSN and the UE agree on the mapping method and the constant.

Wherein the SGSN and the UE are also used for storing the key identity identifier of the target system generated during mapping together with the target system key generated from the K_{ASME}.

Wherein the sum of the KSI_{ASME} and the constant can not be 111, otherwise, it may be altered according to the agreement between the UE and the SGSN, e.g. by replacing it with a next value 000 or another value.

The UE and the SGSN are also used for deleting a key stored before transferring when the UE and the SGSN have agreed on a key before transferring and the stored key identity identifier of the target system is the same as the key identity identifier of the target system mapped from the KSI_{ASME} during transferring.

Wherein transferring of the UE from the EUTRAN to another radio access system means transferring of the UE to a UTRAN system or a GERAN system; and there are two types of transferring: idle transferring and switching.

Wherein the UE consists of a message interaction unit, a key identifier mapping unit and a key and key identifier storage unit;
the message interaction unit is used for receiving a message from a network side;
the key identifier mapping unit is used for mapping the KSI_{ASME} into the key identity identifier of the target system when the message interaction unit receives a switching command, a route area update acceptance message or a route area attachment acceptance message, mapping the KSI_{ASME} into a KSI when the target system is a UTRAN, and mapping the KSI_{ASME} into a CKSN when the target system is a GERAN; and
the key and key identifier storage unit is used for storing a key of a target system and a key identity identifier of the target system together.

The MME consists of a request message receiving unit and a security parameter processing unit;
the request message receiving unit is used for receiving transfer request messages from other network entities and instructing the security parameter processing unit to process these messages; if the transfer request message is a context request message or an identification request message, then the request message receiving unit sends a first processing instruction to the security parameter processing unit; if the transfer request message is a switching request message, then the request message receiving unit sends a second processing instruction to the security parameter processing unit; and
the security parameter processing unit is used for generating a CK and an IK based on the K_{ASME} and sending the KSI_{ASME} together with the IK and the CK which are generated from the K_{ASME} to the SGSN after receiving an instruction from the request message receiving unit; if the instruction is the first processing instruction, then the security parameter processing unit sends the KSI_{ASME} together with the IK and the CK which are generated from the K_{ASME} to the SGSN through a context response message or an identification response message; and if the instruction is the second processing instruction, then the security parameter processing unit sends the KSI_{ASME} together with the IK and the CK which are generated from the K_{ASME} to the SGSN through a forward and redirect request message.

The SGSN consists of a security parameter processing unit, a message interaction unit, a key identifier mapping unit, and a key generating unit;
the security parameter receiving unit is used for receiving the keys and the KSI_{ASME} from the MME, sending the KSI_{ASME} to the key identifier mapping unit, generating a key of a target system based on the keys sent by the MME and sending it to the key and key identifier storage unit: if the target system is judged to be a UTRAN, then the security parameter receiving unit sends the keys sent by the MME to the key and key identifier storage unit; and if the target system is a GERAN, then the security parameter receiving unit generates a Kc based on the keys sent by the MME and sends the Kc to the key and key identifier storage unit;
the key identifier mapping unit is used for mapping the KSI_{ASME} into a key identity identifier of a target system after receiving the KSI_{ASME}: if the target system is judged to be a UTRAN, then the key identifier mapping unit maps the KSI_{ASME} into a KSI; and if the target system is a GERAN, then the key identifier mapping unit maps the KSI_{ASME} into a CKSN; and sending the key identity identifier acquired through mapping to the key and key identifier storage unit;
the key and key identifier storage unit is used for storing both the key of the target system sent by the security parameter receiving unit and the key identity identifier of the target system sent by the key identifier mapping unit, and notifying the message interaction unit of the mapping completion after storing; and
the message interaction unit is used for sending a notification of mapping success of the network-side key identifier after receiving the message of mapping completion.

Wherein the message interaction unit in the UE is also used for sending a route area update request message or a route area attachment request message to the SGSN when the UE decides to transfer in an idle state; and
the message interaction unit in the SGSN is also used for sending a corresponding context request message or identification request message to the MME after receiving the route area update request message or the route area attachment request message.

Wherein the key identifier mapping unit in the UE is also used for mapping the KSI_{ASME} into the key identity identifier of the target system when the UE decides to transfer in an idle state.

Wherein the message interaction unit in the SGSN sends a notification of mapping success of the network-side key identifier, i.e.: if the message of sending the key and the key identifier by the MME is a context response message or an identification response message, then the message interaction unit accordingly sends a route area update acceptance message or a route area attachment acceptance message to the UE to indicate mapping success of the network-side key identifier; and if the message of sending the key and the key identifier by the MME is a forward and redirect request message, then the message interaction unit sends a forward and redirect response message to the MME to indicate mapping success of the network-side key identifier.

The system for generating a key identity identifier maps a value of a KSI_{ASME} into a value of a KSI or a value of a CKSN, and guarantees that the KSI or CKSN acquired through mapping and a key sequence number previously stored in a SGSN do not repeat, thus solving the problem in the prior art that an IK and a CK or a Kc mapped from the K_{ASME} cannot be reused due to lack of identity identifiers when the UE transfers from an EUTRAN to a UTRAN, and reducing interactive signaling between the UE and the network, and improving user satisfaction.

The following part further describes the invention with six application examples.

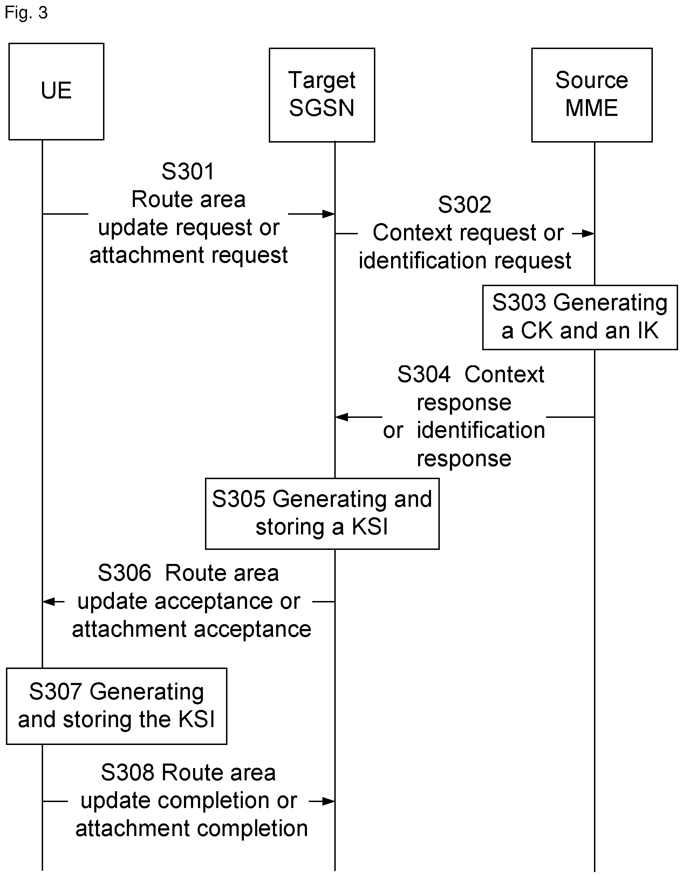

Fig. 3 is Application Example One of the method in the present invention, illustrating a flowchart of the method for generating a key identifier when a UE transfers in an idle state from an EUTRAN to a UTRAN, which includes the following steps:
step S301: a UE decides to transfer to a UTRAN in an idle state and sends a target SGSN a request message of idle transferring to the UTRAN, wherein the request message may be a route area update request message or a route area attachment request message;
step S302: after receiving the request message of idle transferring to the UTRAN sent from the UE, the target SGSN sends a source MME a request message, wherein the type of the request message is corresponding to that of a transfer request message, i.e., it can be a context request message or an identification request message;
step S303: after receiving the request message from the target SGSN, the source MME generates a CK and an IK based on a K_{ASME};
step S304: the source MME correspondingly responds with a context response message or an identification response message, and sends the CK, the IK and a KSI_{ASME} to the target SGSN;
step S305: after receiving the CK, the IK and the KSI_{ASME} from the source MME, the target SGSN assigns the value of the KSI_{ASME} to a KSI, i.e., KSI=KSI_{ASME}, and stores the KSI together with the CK and the IK;
step S306: the target SGSN sends the UE a acceptance message of idle transferring to the UTRAN (correspondingly, a route area update acceptance message or a route area attachment acceptance message) to notify the UE of mapping success of the network-side key identifier;
step S307: the UE assigns the value of the KSI_{ASME} to a KSI, i.e., KSI=KSI_{ASME}, and stores the KSI together with the IK and the CK which are generated from the K_{ASME}; and
step S308: the UE sends a corresponding route area update completion message or route area attachment completion message to the target SGSN.

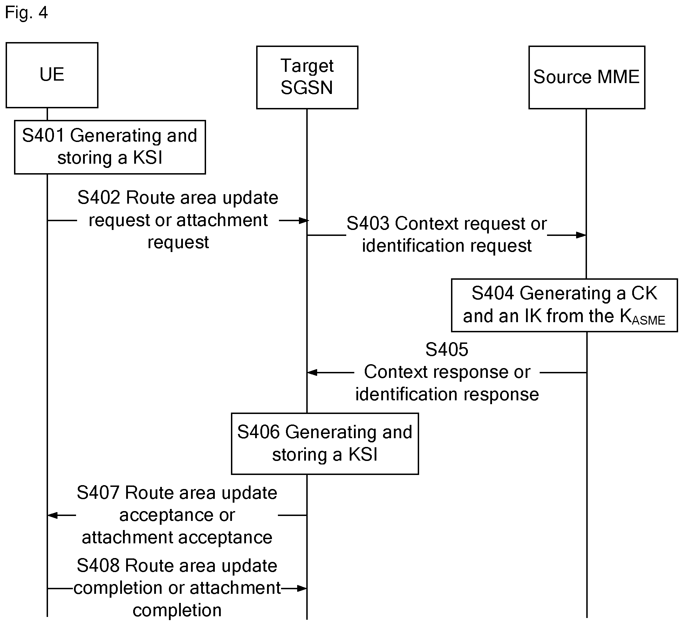

Fig. 4 is Application Example Two of the method in the present invention, illustrating a flowchart of the method for generating a key identifier when a UE transfers in an idle state from an EUTRAN to a UTRAN, which includes the following steps:
step S401: a UE decides to transfer to a UTRAN in an idle state, assigns a value of a KSI_{ASME} to a KSI, i.e., KSI=KSI_{ASME}, and stores the KSI together with an IK and a CK which are generated from a K_{ASME};
step S402: the UE sends a target SGSN a request message of idle transferring to the UTRAN, wherein the request message may be a route area update request message or a route area attachment request message;
step S403: after receiving the request message of idle transferring to the UTRAN sent from the UE, the target SGSN sends a source MME a request message, wherein the type of the request message is corresponding to that of the transfer request message, i.e., it can be a context request message or an identification request message;
step S404: after receiving the request message from the SGSN, the source MME generates a CK and an IK based on the K_{ASME};
step S405: the MME correspondingly responds with a context response message or an identification response message, and sends the CK, the IK and the KSI_{ASME} to the SGSN;
step S406: after receiving the KSI_{ASME}, the CK and the IK from the source MME, the target SGSN assigns the value of the KSI_{ASME} to a KSI, i.e., KSI=KSI_{ASME}, and stores the KSI together with the CK and the IK;
step S407: the target SGSN sends the UE a acceptance message of idle transferring to the UTRAN (correspondingly, a route area update acceptance message or an attachment acceptance message) to notify the UE of mapping success of the network-side key identifier; and
step S408: the UE sends a corresponding route area update completion message or route area attachment completion message to the target SGSN.

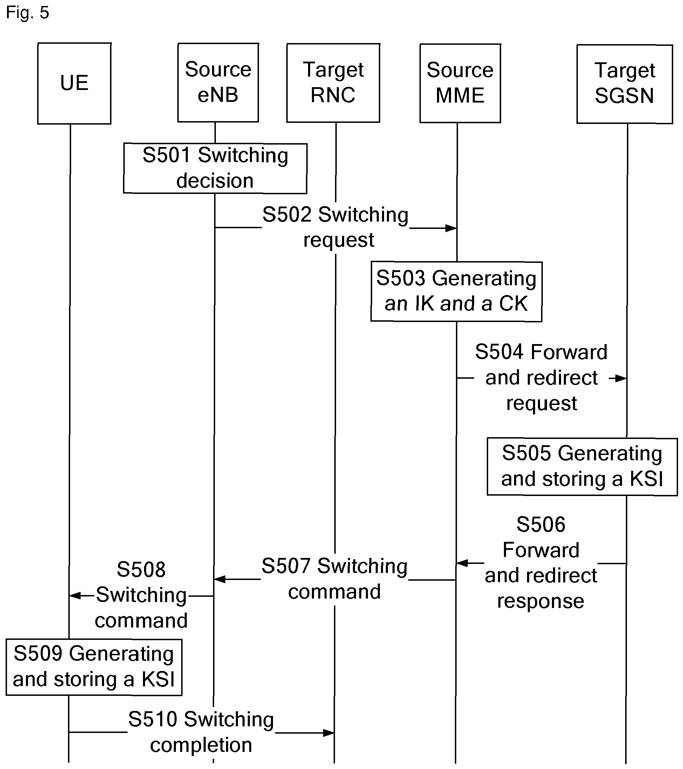

Fig. 5 is Application Example Three of the method in the present invention, illustrating a flowchart of the method for generating a key identifier when a UE switches in an idle state from an EUTRAN to a UTRAN, which includes the following steps:
step S501: a source eNB decides to initiate switching based on either a survey report sent from a UE to the eNB or other reasons;
step S502: the source eNB sends a source MME a switching request message;
step S503: the source MME generates an IK and a CK based on a K_{ASME};
step S504: the source MME sends a target SGSN a forward and redirect request, and transmits a KSI_{ASME} together with the IK and the CK to the target SGSN;
step S505: the target SGSN assigns the value of the KSI_{ASME} to a KSI, i.e., KSI=KSI_{ASME}, and stores the KSI together with the IK and the CK;
step S506: the target SGSN sends the source MME a forward and redirect response message to notify the source MME that the target service network has been prepared for switching;
step S507: the source MME sends the eNB a switching command;
step S508: the source eNB sends the UE an EUTRAN switching command;
step S509: the UE assigns the value of the KSI_{ASME} to a KSI, i.e., KSI=KSI_{ASME}, generates an IK and a CK based on the K_{ASME}, and stores the KSI together with the CK and the IK; and
step S510: the UE sends a switching success message to a target RNC to notify it of mapping success of the network KSI.

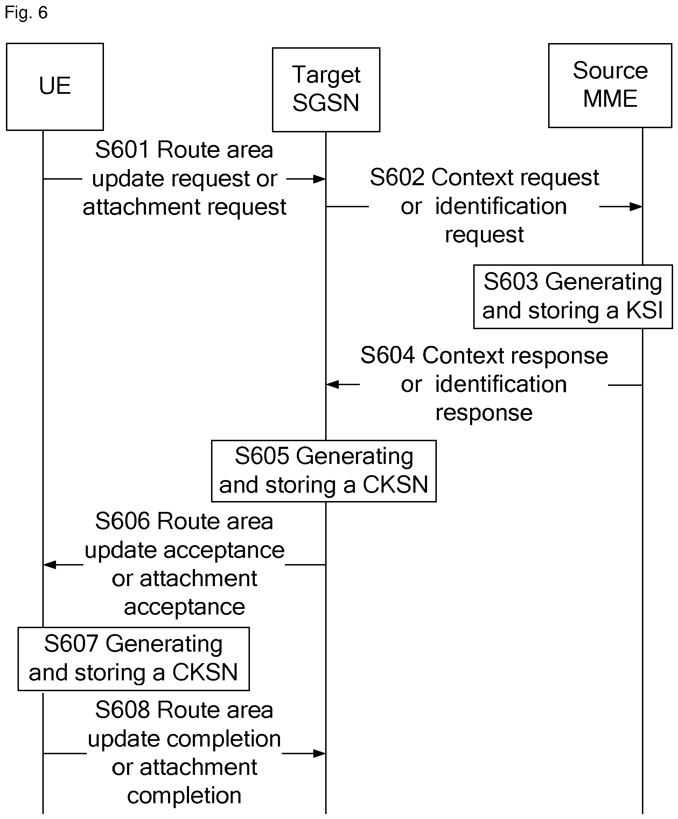

Fig. 6 is Application Example Four of the method in the present invention, illustrating a flowchart of the method for generating a key identifier when a UE transfers in an idle state from an EUTRAN to a GERAN, which includes the following steps:
step S601: a UE decides to transfer to a GERAN in an idle state, and sends a target SGSN a request message of idle transferring to the GERAN, wherein the request message can be a route area update request message or a route area attachment request message;
step S602: after receiving the request message of idle transferring to the GERAN sent from the UE, the target SGSN sends a source MME a request message, wherein the type of the request message is corresponding to that of a received transfer request message, i.e., it can be a context request message or an identification request message;
step S603: after receiving the request message from the target SGSN, the source MME generates a CK and an IK based on a K_{ASME};
step S604: the source MME correspondingly responds with a context response message or an identification response message, and sends the CK, the IK and a KSI_{ASME} to the target SGSN;
step S605: after receiving the KSI_{ASME}, the CK and the IK from the source MME, the target SGSN assigns the value of the KSI_{ASME} to a CKSN, i.e., CKSN=KSI_{ASME}, and stores the CKSN together with a Kc generated from the CK and the IK;
step S606: the target SGSN sends the UE a corresponding acceptance message of idle transferring to the UTRAN (correspondingly, a route area update acceptance message or a route area attachment acceptance message) to notify the UE of mapping success of the network-side key identifier;
step S607: the UE assigns the value of the KSI_{ASME} to a CKSN, i.e., CKSN=KSI_{ASME}, and stores the CKSN together with a Kc generated from the K_{ASME}; and
step S608: the UE sends a corresponding route area update completion message or route area attachment completion message to the target SGSN.

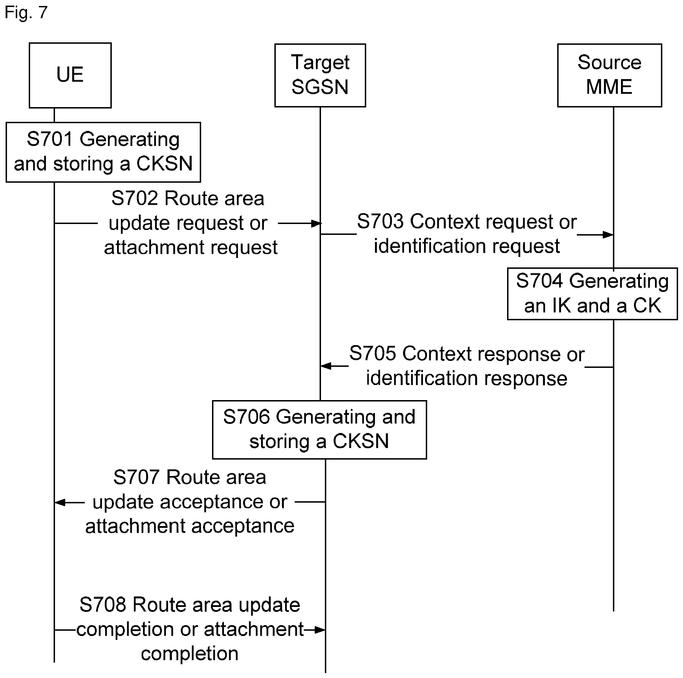

Fig. 7 is Application Example Five of the method in the present invention, illustrating a flowchart of the method for generating a key identifier when a UE transfers in an idle state from an EUTRAN to a GERAN, which includes the following steps:
step S701: a UE decides to transfer to a GERAN in an idle state, assigns a value of a KSI_{ASME} to a CKSN, i.e., CKSN=KSI_{ASME}, and stores the CKSN together with a Kc generated from a K_{ASME};
step S702: the UE sends a target SGSN a request message of idle transferring to the GERAN, wherein the request message can be a route area update request message or a route area attachment request message;
step S703: after receiving the request message of idle transferring to the GERAN sent from the UE, the target SGSN sends a source MME a request message, wherein the type of the request message is corresponding to that of a received transfer request message, i.e., it can be a context request message or an identification request message;
step S704: after receiving the request message from the target SGSN, the source MME generates a CK and an IK based on the K_{ASME};
step S705: the source MME correspondingly responds with a context response message or an identification response message, and sends the CK, the IK and the KSI_{ASME} to the target SGSN;
step S706: after receiving the KSI_{ASME}, the CK and the IK from the source MME, the target SGSN assigns the value of the KSI_{ASME} to a CKSN, i.e., CKSN=KSI_{ASME}, and stores the CKSN together with a Kc generated from the CK and the IK;
step S707: the target SGSN sends the UE a acceptance message of idle transferring to the GERAN (correspondingly, a route area update acceptance message or a route area attachment acceptance message) to notify the UE of mapping success of the network-side key identifier; and
step S708: the UE sends a corresponding route area update completion message or route area attachment completion message to the target SGSN.

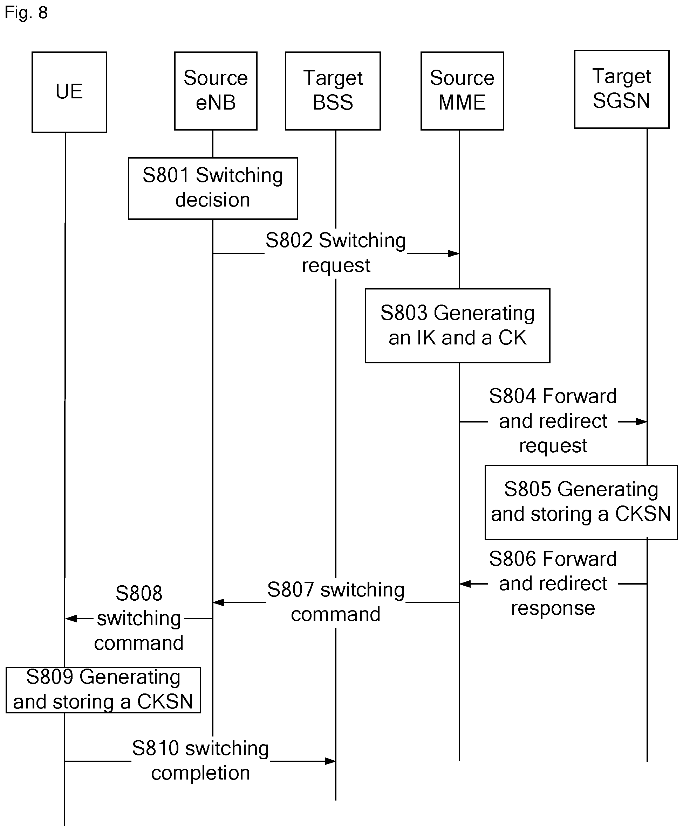

Fig. 8 is Application Example Six of the method in the present invention, illustrating a flowchart of the method for generating a key identifier when a UE switches in an idle state from an EUTRAN to a GERAN, which includes the following steps:
step S801: a source eNB decides to initiate switching based on either a survey report sent from a UE to the eNB or other reasons;
step S802: the source eNB sends a source MME a switching request message;
step S803: the source MME generates an IK and a CK based on a K_{ASME};
step S804: the source MME sends a target SGSN a forward and redirect request, and transmits a KSI_{ASME} together with the IK and the CK to the target SGSN;
step S805: the target SGSN assigns the value of the KSI_{ASME} to a CKSN, i.e., CKSN=KSI_{ASME}, and stores the CKSN together with a Kc generated from the IK and the CK;
step S806: the target SGSN sends the source MME a forward and redirect response message to notify the source MME that the target service network has been prepared for switching;
step S807: the source MME sends the eNB a switching command;
step S808: the source eNB sends the UE an EUTRAN switching command;
step S809: the UE assigns the value of the KSI_{ASME} to a CKSN, i.e., CKSN=KSI_{ASME}, generates a Kc based on the K_{ASME}, and stores the CKSN together with the Kc; and
step S810: the UE sends a switching success message to a target RNC to notify it of mapping success of the network CKSN.

In the above-mentioned six application examples, the UE and the SGSN may also assign the sum of the KSI_{ASME} and a constant to the key identity identifier of the target system; the constant is agreed on by the UE and the network, wherein the sum of the KSI_{ASME} and the constant can not be 111, otherwise, it may be altered according to the agreement between the UE and the SGSN, e.g. by replacing it with a next value 000 or another value.

Obviously, those skilled in the art should understand that various modules or steps of the present invention can be implemented by universal computing devices, they may be integrated in a single computing device, or may be distributed in a network consisting of multiple computing devices; alternatively, they can be implemented by codes executable by computing devices. Therefore, they can be stored in a storage device to be executed by a computing device, or they can be made into various integrated circuit modules, or multiple modules or steps thereof can be made into a single integrated circuit module. Thus, the present invention is not limited to any specific combination of hardware and software.

The above examples are only preferred embodiments of the present invention, and do not constitute limitation to the present invention. For those skilled in the art, the present invention can have a variety of modifications and changes.

## Claims

1. A method for generating a key identity identifier when a user equipment, UE, transfers, including the following steps:
when a UE transfers from an evolved universal mobile telecommunications system. UMTS, terrestrial radio access network, EUTRAN, to a target system, a mobility management entity, MME, of the EUTRAN sending an identity identifier of an access security management entity key, K_{ASME}, KSI_{ASME}, to a serving general packet radio service, GPRS, support node, SGSN, of the target system (A1,B1), and both the SGSN and the UE mapping the KSI_{ASME} into a key identity identifier of the target system; wherein mapping the KSI_{ASME} into a key set identifier, KSI, when the target system is a UMTS terrestrial radio access network, UTRAN (A2,A3) and mapping the KSI_{ASME} into a ciphering key sequence number, CKSN, when the target system is a GPRS/enhanced data rates for global evolution, EDGE, radio access network, GERAN (B2,B3)
wherein, the MME of the EUTRAN sending KSI_{ASME}, to the SGSN of the target system, comprises:
the MME generating an integrity key, IK, and a ciphering key, CK, based on the K_{ASME} and sending the KSI_{ASME} together with the IK and the CK which are generated from the K_{ASME} to the SGSN (A1,B1).

2. The generating method according to claim 1, wherein the mapping includes the following steps: directly assigning the KSI_{ASME} to the key identity identifier of the target system, or directly assigning the sum of the KSI_{ASME} and a constant that is agreed on by the UE and the network to the key identity identifier of the target system.

3. The generating method according to any of claims 1 to 2, wherein the specific steps are as follows when the UE transfers in an idle state from the EUTRAN to 2. the UTRAN: A1: after receiving a context request message or an identification request message, the MME generates the IK and the CK based on the K_{ASME}, and sends the KSI_{ASME} together with the IK and the CK which are generated from the K_{ASME} to the SGSN through a context response message or an identification response message; A2: after receiving the KSI_{ASME}, the IK and the CK from the MME, the SGSN maps the KSI_{ASME} intro the KSI, and stores the KSI, the IK and the CK; and the SGSN sends a message of indicating mapping completion of the KSI to the UE; and A3: the UE maps the KSI_{ASME} into the KSI, and stores the KSI together with the IK and the CK which are generated from the K_{ASME}.

4. The generating method according to claim 3, wherein step A3 takes place in any step after the UE decides to transfer to the UTRAN in an idle state and before the UE sends a corresponding route area update completion message or route area attachment completion message to the SGSN.

5. The generating method according to any of claims 1 to 2, wherein the specific steps are as follows when the UE switches from the EUTRAN to the UTRAN: a1: after receiving a switching request message, the MME generates the and the CK based on the K_{ASME}, and sends the KSI_{ASME} together with the IK and the CK which are generated from the K_{ASME} to the SGSN through a forward and redirect request message; a2: after receiving the KSI_{ASME} together with the IK and the CK from the MME, the SGSN maps the KSI_{ASME} into the KSI, and stores the KSI, the IK and the CK together; the SGSN sends a forward and redirect response message of indicating mapping completion of the KSI to the MME; and the MME sends a switching command to instruct the UE to switch; and a3: after receiving the switching command from the network, the UE maps the KSI_{ASME} into the KSI, and stores the KSI together with the IK and the CK which are generated from the K_{ASME}.

6. The generating method according to any of claims 1 to 2, wherein the specific steps are as follows when the UE transfers in an idle state from the EUTRAN to the GERAN:
B1: after receiving a context request message or an identification request message, the MME generates the IK and the CK based on the K_{ASME}, and sends the KSI_{ASME} together with the IK and the CK which are generated from the K_{ASME} to the SGSN through a context response message or an identification response message;
B2: after receiving the KSI_{ASME}, the IK and the CK from the MME, the SGSN generates a ciphering key, Kc, of the GERAN based on the IK and the CK, maps the KSI_{ASME} into the CKSN of the GERAN, and stores the CKSN of the GERAN together with the Kc of the GERAN; and the SGSN sends the UE a message of indicating mapping completion of the CKSN of the GERAN; and
B3: the UE maps the KSI_{ASME} into the CKSN of the GERAN, and stores the CKSN of the GERAN together with the Kc of the GERAN generated from the K_{ASME}.

7. The generating method according to claim 6, wherein step B3 takes place in any step after the UE decides to transfer to the GERAN in an idle state and before the UE sends a switching message to the network.

8. The generating method according to any of claims 1 to 2, wherein the specific steps are as follows when the UE switches from the EUTRAN to the CERAN:
b1: after receiving a switching request message, the MME generates the IK and the CK based on the K_{ASME}, and sends the KSI_{ASME} together with the IK and the CK which are generated from the K_{ASME} to the SGSN through a forward and redirect request message;
b2: after receiving the KSI_{ASME} together with the IK and the CK from the MME, the SGSN generates a Kc of the GERAN based on the IK and the CK, assigns the value of the KSI_{ASME} to the CKSN of the GERAN, and stores the CKSN of the GERAN together with the Kc of the GERAN; the SGSN sends a message of indicating mapping completion of the CKSN of the GERAN to the MME; and the MME sends a switching command to instruct the UE to switch; and
b3: after receiving the switching command from the network, the UE maps the KSI_{ASME} into the CKSN of the GERAN, and stores the CKSN of the GERAN together with the Kc of the GERAN generated from the K_{ASME}.

9. A system for generating a key identity identifier when a UE transfers, including a user equipment, UE, an mobility management entity, MME, and a serving general packet radio service, GPRS, support node, SGSN:
the MME being adapted for sending an identity identifier of an access security management entity key, K_{ASME}, KSI_{ASME}, to the SGSN when the UE transfers from an evolved universal mobile telecommunications system, UMTS, terrestrial radio access network, EUTRAN, to a target system (A1,B1); and
both the SGSN and the UE being adapted for mapping the KSI_{ASME} into a key identity identifier of the target system, wherein mapping the KSI_{ASME} into a key set identifier, KSI, when the target system is a UMTS terrestrial radio access network, UTRAN (A2,A3), and mapping the KSI_{ASME} into a ciphering key sequence number, CKSN, when the target system is a GPRS/enhanced data rates for global evolution, EDGE, radio access network, GERAN (B2,B3);
wherein, the MME being adapted for generating an integrity key, IK, and a ciphering key, CK, based on the K_{ASME} and sending the KSI_{ASME} together with the IK and the CK which are generated from the K_{ASME} to then SGSN (A1,B1).

10. The generating system according to claim 9, wherein the SGSN/UE being adapted to perform mapping by directly assigning the KSI_{ASME} to the key identity identifier of the target system, or directly assigning the sum of the KSI_{ASME} and a constant that is agreed on by the UE and the network to the key identity identifier of the target system.

11. The generating system according to claim 9, wherein the UE and the SGSN are further adapted for deleting a key stored before transferring when the UE and the SGSN have agreed on a key before transferring and a key identity identifier of a target system is the same as the key identity identifier of the target system converted from the KSI_{ASME} during transferring.

12. The generating system according to any of claims 9 to 11, wherein the UE comprises
a message interaction unit, a key identifier mapping unit and a key and key identifier storage unit;
the message interaction unit is adapted for receiving a message from a network side;
the key identifier mapping unit is adapted for mapping the KSI_{ASME} into a key identity identifier of a target system when the message interaction unit receives a switching command, a route area update acceptance message or a route area attachment acceptance message; and
the key and key identifier storage unit is adapted for storing a key of a target system and a key identity identifier of the target system together;
the MME comprises a request message receiving unit and a security parameter processing unit;
the request message receiving unit is adapted for receiving transfer request messages from other network entities and instructing the security parameter processing unit to process these messages; and
the security parameter processing unit is adapted for generating the CK and the IK from the K_{ASME} and sending the KSI_{ASME} together with the IK and the CK which are generated from the K_{ASME} to the SGSN after receiving the instruction from the request message receiving unit;
the SGSN comprises a security parameter processing unit, a message interaction unit, a key identifier mapping unit, and a key generating unit;
the security parameter receiving unit is adapted for receiving the keys and the KSI_{ASME} from the MME, sending the KSI_{ASME} to the key identifier mapping unit, acquiring the key of the target system based on the keys sent by the MME, and sending it to the key and key identifier storage unit;
the key identifier mapping unit is adapted for mapping the KSI_{ASME} into a key identity identifier of the target system after receiving the KSI_{ASME};
the key and key identifier storage unit is adapted for storing both the key of the target system sent by the security parameter receiving unit and the key identity identifier of the target system sent by the key identifier mapping unit, and notifying the message interaction unit of mapping completion after storing; and
the message interaction unit is adapted for sending a notification of mapping success of the network-side key identifier after receiving the message of mapping completion.

13. The generating system according to claim 12, wherein the security parameter receiving unit in the SGSN is adapted for acquiring the key of the target system based on the keys sent by the MME and is adapted for sending it to the key and key identifier storage unit, wherein
when the target system is a UTRAN, the keys sent by the MME are sent to the key and key identifier storage unit; and when the target system is a GERAN, the keys sent by the MME are used to generate a Kc of the GERAN which is sent to the key and key identifier storage unit.

14. The generating system according to claim 12, wherein the key identifier mapping unit in the UE is further adapted for mapping the KSI_{ASME} into the key identity identifier of the target system when the UE decides to transfer in an idle state.

15. The generating system according to claim 12, wherein
the message interaction unit in the UE is further adapted for sending a route area update request message or a route area attachment request message to the SGSN when the UE decides to transfer in an idle state;
the message interaction unit in the SGSN is further adapted for sending a corresponding context request message or identification request message to the MME after receiving the route area update request message or the route area attachment request message;
the request message receiving unit in the MME is adapted for sending a first processing instruction to the security parameter processing unit if the transfer request message is a context request message or an identification request message, and the request message receiving unit is adapted for sending a second processing instruction to the security parameter processing unit if the transfer request message is a switching request message; and
the security parameter processing unit in the MME is adapted for sending the KSI_{ASME} together with the IK and the CK which are generated from the K_{ASME} to the SGSN through a context response message or an identification response message after receiving the first processing instruction, and the security parameter processing unit is adapted for sending the KSI_{ASME} together with the IK and the CK which are generated from the K_{ASME} to the SGSN through a forward and redirect request message after receiving the second processing instruction.

16. The generating system according to claim 15, wherein the message interaction unit in the SGSN is adapted for sending a notification of mapping success of the network-side key identifier, wherein if the message of sending the key and the key identifier by the MME is a context response message or an identification response message, then the message interaction unit is adapted for sending a route area update acceptance message or a route area attachment acceptance message to the UE to indicate mapping success of the network-side key identifier; and if the message of sending the key and the key identifier by the MME is a forward and redirect request message, then the message interaction unit is adapted for sending a forward and redirect response message to the MME to indicate mapping success of the network-side key identifier.

## Patentansprüche

1. Verfahren zur Erzeugung einer Schlüsselidentitätskennung, wenn sich eine Benutzereinrichtung, UE, transferiert, enthaltend die nachfolgenden Schritte:
wenn sich eine UE aus einem weiterentwickelten terrestrischen Funkzugangsnetzwerk, EUTRAN, im universellen mobilen Telekommunikationssystem, UMTS, in ein Zielsystem transferiert, Senden einer Identitätskennung eines Zugangssicherheitsmanagement-Entitäts-Schlüssels, K_{ASME}, KSI_{ASME}, durch eine Mobilitätsmanagement-Entität, MME, des EUTRAN an einen im allgemeinen paketorientierten Funkdienst, GPRS, bedienenden Hilfsknoten, SGSN, des Zielsystems (A1, B1) und Abbilden der KSI_{ASME} auf eine Schlüsselidentitätskennung des Zielsystems durch sowohl den SGSN als auch die UE; wobei die KSI_{ASME} auf eine Schlüsselsatzkennung, KSI, abgebildet wird, wenn das Zielsystem ein terrestrisches UMTS-Funkzugangsnetzwerk, UTRAN (A2, A3) ist, und wobei die KSI_{ASME} auf eine Kodierschlüsselsequenznummer, CKSN, abgebildet wird, wenn das Zielsystem ein Funkzugangsnetzwerk, GERAN (B2, B3), im GPRS/erhöhte Datenraten für globale Weiterentwicklung, EDGE, ist;
wobei das Senden der KSI_{ASME} an den SGSN des Zielsystems durch die MME des EUTRAN umfasst:
Erzeugen eines Integritätsschlüssels, IK, und eines Kodierschlüssels, CK, basierend auf dem K_{ASME} durch die MME und Senden der KSI_{ASME} zusammen mit dem IK und dem CK, die aus dem K_{ASME} erzeugt wurden, an den SGSN (A1, B1).

2. Erzeugungsverfahren nach Anspruch 1, wobei das Abbilden die nachfolgenden Schritte enthält: direktes Zuordnen der KSI_{ASME} zu der Schlüsselidentitätskennung des Zielsystems, oder direktes Zuordnen der Summe aus der KSI_{ASME} und einer zwischen der UE und dem Netzwerk ausgehandelten Konstante zu der Schlüsselidentitätskennung des Zielsystems.

3. Erzeugungsverfahren nach einem der Ansprüche 1 bis 2, wobei die spezifischen Schritte die nachfolgenden sind, wenn sich die UE in einem Ruhezustand aus dem EUTRAN in das UTRAN transferiert:
A1: nach dem Empfangen einer Context-Request-Meldung oder einer Identification-Request-Meldung erzeugt die MME den IK und den CK basierend auf dem K_{ASME} und sendet die KSI_{ASME} zusammen mit dem IK und dem CK, die aus dem K_{ASME} erzeugt wurden, mittels einer Context-Response-Meldung oder einer Identification-Response-Meldung an den SGSN;
A2: nach dem Empfangen der KSI_{ASME}, des IK und des CK von der MME bildet der SGSN die KSI_{ASME} auf die KSI ab und speichert die KSI, den IK und den CK; und der SGSN sendet eine Meldung an die UE, die den Abschluss des Abbildens der KSI angibt; und
A3: die UE bildet die KSI_{ASME} auf die KSI ab und speichert die KSI zusammen mit dem IK und dem CK, die aus dem K_{ASME} erzeugt wurden.

4. Erzeugungsverfahren nach Anspruch 3, wobei Schritt A3 in einem beliebigen Schritt, nachdem die UE entscheidet, sich im Ruhezustand in das UTRAN zu transferieren, und bevor die UE eine entsprechende Route-Area-Update-Completion-Meldung oder Route-Area-Attachment-Completion-Meldung an den SGSN sendet, stattfindet.

5. Erzeugungsverfahren nach einem der Ansprüche 1 bis 2, wobei die spezifischen Schritte die nachfolgenden sind, wenn die UE aus dem EUTRAN in das UTRAN wechselt:
a1: nach dem Empfangen einer Switching-Request-Meldung erzeugt die MME den IK und den CK basierend auf dem K_{ASME} und sendet die KSI_{ASME} zusammen mit dem IK und dem CK, die aus dem K_{ASME} erzeugt wurden, mittels einer Forward-and-Redirect-Request-Meldung an den SGSN;
a2: nach dem Empfangen der KSI_{ASME} zusammen mit dem IK und dem CK von der MME bildet der SGSN die KSI_{ASME} auf die KSI ab und speichert die KSI, den IK und den CK zusammen; der SGSN sendet eine Forward-and-Redirect-Response-Meldung an die MME, die den Abschluss des Abbildens der KSI angibt; und die MME sendet einen Switching-Befehl, der der UE den Auftrag zum Wechseln gibt; und
a3: nach dem Empfangen des Switching-Befehls vom Netzwerk bildet die UE die KSI_{ASME} auf die KSI ab und speichert die KSI zusammen mit dem IK und dem CK, die aus dem K_{ASME} erzeugt wurden.

6. Erzeugungsverfahren nach einem der Ansprüche 1 bis 2, wobei die spezifischen Schritte die nachfolgenden sind, wenn sich die UE in einem Ruhezustand aus dem EUTRAN in das GERAN transferiert:
B1: nach dem Empfangen einer Context-Request-Meldung oder einer Identification-Request-Meldung erzeugt die MME den IK und den CK basierend auf dem K_{ASME} und sendet die KSI_{ASME} zusammen mit dem IK und dem CK, die aus dem K_{ASME} erzeugt wurden, mittels einer Context-Response-Meldung oder einer Identification-Response-Meldung an den SGSN;
B2: nach dem Empfangen der KSI_{ASME}, des IK und des CK von der MME erzeugt der SGSN einen Kodierschlüssel, Kc, des GERAN basierend auf dem IK und dem CK, bildet die KSI_{ASME} auf die CKSN des GERAN ab und speichert die CKSN des GERAN zusammen mit dem Kc des GERAN; und der SGSN sendet eine Meldung an die UE, die den Abschluss des Abbildens der CKSN des GERAN angibt; und
B3: die UE bildet die KSI_{ASME} auf die CKSN des GERAN ab und speichert die CKSN des GERAN zusammen mit dem Kc des GERAN, der aus dem K_{ASME} erzeugt wurde.

7. Erzeugungsverfahren nach Anspruch 6, wobei Schritt B3 in einem beliebigen Schritt, nachdem die UE entscheidet, sich im Ruhezustand in das GERAN zu transferieren, und bevor die UE eine Switching-Meldung an das Netzwerk sendet, stattfindet.

8. Erzeugungsverfahren nach einem der Ansprüche 1 bis 2, wobei die spezifischen Schritte die nachfolgenden sind, wenn die UE aus dem EUTRAN in das GERAN wechselt:
b1: nach dem Empfangen einer Switching-Request-Meldung erzeugt die MME den IK und den CK basierend auf dem K_{ASME} und sendet die KSI_{ASME} zusammen mit dem IK und dem CK, die aus dem K_{ASME} erzeugt wurden, mittels einer Forward-and-Redirect-Request-Meldung an den SGSN;
b2: nach dem Empfangen der KSI_{ASME} zusammen mit dem IK und dem CK von der MME erzeugt der SGSN einen Kc des GERAN basierend auf dem IK und dem CK, ordnet den Wert der KSI_{ASME} der CKSN des GERAN zu und speichert die CKSN des GERAN zusammen mit dem Kc des GERAN; der SGSN sendet eine Meldung an die MME, die den Abschluss des Abbildens der CKSN des GERAN angibt; und die MME sendet einen Switching-Befehl, der der UE den Auftrag zum Wechseln gibt; und
b3: nach dem Empfangen des Switching-Befehls vom Netzwerk bildet die UE die KSI_{ASME} auf die CKSN des GERAN ab und speichert die CKSN des GERAN zusammen mit dem Kc des GERAN, der aus dem K_{ASME} erzeugt wurde.

9. System zur Erzeugung einer Schlüsselidentitätskennung, wenn sich eine UE transferiert, enthaltend eine Benutzereinrichtung, UE, eine Mobilitätsmanagement-Entität, MME, und einen im allgemeinen paketorientierten Funkdienst, GPRS, bedienenden Hilfsknoten, SGSN:
wobei die MME dazu angepasst ist, eine Identitätskennung eines Zugangssicherheitsmanagement-Entitäts-Schlüssels, K_{ASME}, KSI_{ASME}, an den SGSN zu senden, wenn sich die UE aus einem weiterentwickelten terrestrischen Funkzugangsnetzwerk, EUTRAN, im universellen mobilen Telekommunikationssystem, UMTS, in ein Zielsystem (A1, B1) transferiert; und
sowohl der SGSN als auch die UE dazu angepasst sind, die KSI_{ASME} auf eine Schlüsselidentitätskennung des Zielsystems abzubilden, wobei die KSI_{ASME} auf eine Schlüsselsatzkennung, KSI, abgebildet wird, wenn das Zielsystem ein terrestrisches UMTS-Funkzugangsnetzwerk, UTRAN (A2, A3) ist, und wobei die KSI_{ASME} auf eine Kodierschlüsselsequenznummer, CKSN, abgebildet wird, wenn das Zielsystem ein Funkzugangsnetzwerk, GERAN (B2, B3), im GPRS/erhöhte Datenraten für globale Weiterentwicklung, EDGE, ist;
wobei die MME zum Erzeugen eines Integritätsschlüssels, IK, und eines Kodierschlüssels, CK, basierend auf dem K_{ASME} und zum Senden der KSI_{ASME} zusammen mit dem IK und dem CK, die aus dem K_{ASME} erzeugt wurden, an den SGSN (A1, B1) angepasst ist.

10. Erzeugungssystem nach Anspruch 9, wobei der SGSN/die UE zum Durchführen des Abbildens durch direktes Zuordnen der KSI_{ASME} zu der Schlüsselidentitätskennung des Zielsystems oder durch direktes Zuordnen der Summe aus der KSI_{ASME} und einer zwischen der UE und dem Netzwerk ausgehandelten Konstante zu der Schlüsselidentitätskennung des Zielsystems angepasst sind.

11. Erzeugungssystem nach Anspruch 9, wobei die UE und der SGSN ferner zum Löschen eines vor dem Transferieren gespeicherten Schlüssels angepasst sind, wenn die UE und der SGSN vor dem Transferieren einen Schlüssel ausgehandelt haben und eine Schlüsselidentitätskennung eines Zielsystems identisch mit der Schlüsselidentitätskennung des Zielsystems ist, die während des Transferierens aus der KSI_{ASME} umgewandelt wird.

12. Erzeugungssystem nach einem der Ansprüche 9 bis 11, wobei
die UE eine Meldungsinteraktionseinheit, eine Schlüsselkennungs-Abbildungseinheit und eine Schlüssel-und-Schlüsselkennungs-Speichereinheit umfasst;
die Meldungsinteraktionseinheit zum Empfangen einer Meldung von einer Netzwerkseite angepasst ist;
die Schlüsselkennungs-Abbildungseinheit dazu angepasst ist, die KSI_{ASME} auf eine Schlüsselidentitätskennung eines Zielsystems abzubilden, wenn die Meldungsinteraktionseinheit einen Switching-Befehl, eine Route-Area-Update-Acceptance-Meldung oder eine Route-Area-Attachment-Acceptance-Meldung empfängt; und
die Schlüssel-und-Schlüsselkennungs-Speichereinheit dazu angepasst ist, einen Schlüssel eines Zielsystems und eine Schlüsselidentitätskennung des Zielsystems zusammen zu speichern;
die MME eine Request-Meldungs-Empfangseinheit und eine Sicherheitsparameter-Verarbeitungseinheit umfasst;
die Request-Meldungs-Empfangseinheit dazu angepasst ist, Transfer-Request-Meldungen von anderen Netzwerkentitäten zu empfangen und die Sicherheitsparameter-Verarbeitungseinheit anzuweisen, diese Meldungen zu verarbeiten; und
die Sicherheitsparameter-Verarbeitungseinheit dazu angepasst ist, nach dem Empfangen der Anweisung von der Request-Meldungs-Empfangseinheit den CK und den IK aus dem K_{ASME} zu erzeugen und die KSI_{ASME} zusammen mit dem IK und dem CK, die aus dem K_{ASME} erzeugt wurden, an den SGSN zu senden;
der SGSN eine Sicherheitsparameter-Verarbeitungseinheit, eine Meldungsinteraktionseinheit, eine Schlüsselkennungs-Abbildungseinheit und eine Schlüsselerzeugungseinheit umfasst;
die Sicherheitsparameter-Empfangseinheit dazu angepasst ist, die Schlüssel und die KSI_{ASME} von der MME zu empfangen, die KSI_{ASME} an die Schlüsselkennungs-Abbildungseinheit zu senden, den Schlüssel des Zielsystems basierend auf den von der MME gesendeten Schlüsseln zu erlangen und ihn an die Schlüssel-und-Schlüsselkennungs-Speichereinheit zu senden;
die Schlüsselkennungs-Abbildungseinheit dazu angepasst ist, nach dem Empfangen der KSI_{ASME} die KSI_{ASME} auf eine Schlüsselidentitätskennung des Zielsystems abzubilden;
die Schlüssel-und-Schlüsselkennungs-Speichereinheit dazu angepasst ist, sowohl den von der Sicherheitsparameter-Empfangseinheit gesendeten Schlüssel des Zielsystems als auch die von der Schlüsselkennungs-Abbildungseinheit gesendete Schlüsselidentitätskennung des Zielsystems zu speichern und die Meldungsinteraktionseinheit nach dem Speichern über den Abschluss des Abbildens zu benachrichtigen; und
die Meldungsinteraktionseinheit dazu angepasst ist, nach dem Empfangen der Meldung über den Abschluss des Abbildens eine Benachrichtigung über den Erfolg des Abbildens der netzwerkseitigen Schlüsselkennung zu senden.

13. Erzeugungssystem nach Anspruch 12, wobei
die Sicherheitsparameter-Empfangseinheit im SGSN dazu angepasst ist, den Schlüssel des Zielsystems basierend auf den von der MME gesendeten Schlüsseln zu erlangen und dazu angepasst ist, ihn an die Schlüssel-und-Schlüsselkennungs-Speichereinheit zu senden, wobei, wenn das Zielsystem ein UTRAN ist, die von der MME gesendeten Schlüssel an die Schlüssel-und-Schlüsselkennungs-Speichereinheit gesendet werden; und wobei, wenn das Zielsystem ein GERAN ist, die von der MME gesendeten Schlüssel verwendet werden, um einen Kc des GERAN zu erzeugen, welcher an die Schlüssel-und-Schlüsselkennungs-Speichereinheit gesendet wird.

14. Erzeugungssystem nach Anspruch 12, wobei die Schlüsselkennungs-Abbildungseinheit in der UE ferner dazu angepasst ist, die KSI_{ASME} auf eine Schlüsselidentitätskennung des Zielsystems abzubilden, wenn die UE entscheidet, sich im Ruhezustand zu transferieren.

15. Erzeugungssystem nach Anspruch 12, wobei
die Meldungsinteraktionseinheit in der UE ferner dazu angepasst ist, eine Route-Area-Update-Request-Meldung oder eine Route-Area-Attachment-Request-Meldung an den SGSN zu senden, wenn die UE entscheidet, sich im Ruhezustand zu transferieren;
die Meldungsinteraktionseinheit im SGSN ferner dazu angepasst ist, nach dem Empfangen der Route-Area-Update-Request-Meldung oder Route-Area-Attachment-Request-Meldung eine entsprechende Context-Request-Meldung oder Identification-Request-Meldung an die MME zu senden;
die Request-Meldungs-Empfangseinheit in der MME dazu angepasst ist, einen ersten Verarbeitungsbefehl an die Sicherheitsparameter-Verarbeitungseinheit zu senden, falls die Transfer-Request-Meldung eine Context-Request-Meldung oder eine Identification-Request-Meldung ist, und die Request-Meldungs-Empfangseinheit dazu angepasst ist, einen zweiten Verarbeitungsbefehl an die Sicherheitsparameter-Verarbeitungseinheit zu senden, falls die Transfer-Request-Meldung eine Switching-Request-Meldung ist; und
die Sicherheitsparameter-Verarbeitungseinheit in der MME dazu angepasst ist, nach dem Empfangen des ersten Verarbeitungsbefehls die KSI_{ASME} zusammen mit dem IK und dem CK, die aus dem K_{ASME} erzeugt wurden, mittels einer Context-Response-Meldung oder einer Identification-Response-Meldung an den SGSN zu senden, und die Sicherheitsparameter-Verarbeitungseinheit dazu angepasst ist, nach dem Empfangen des zweiten Verarbeitungsbefehls die KSI_{ASME} zusammen mit dem IK und dem CK, die aus dem K_{ASME} erzeugt wurden, mittels einer Forward-and-Redirect-Request-Meldung an den SGSN zu senden.

16. Erzeugungssystem nach Anspruch 15, wobei die Meldungsinteraktionseinheit im SGSN dazu angepasst ist, eine Benachrichtigung über den Erfolg des Abbildens der netzwerkseitigen Schlüsselkennung zu senden, wobei, falls die Meldung über das Senden des Schlüssels und der Schlüsselkennung durch die MME eine Context-Response-Meldung oder eine Identification-Response-Meldung ist, die Meldungsinteraktionseinheit dazu angepasst ist, eine Route-Area-Update-Acceptance-Meldung oder eine Route-Area-Attachment-Acceptance-Meldung an die UE zu senden, um den Erfolg des Abbildens der netzwerkseitigen Schlüsselkennung anzugeben; und wobei, falls die Meldung über das Senden des Schlüssels und der Schlüsselkennung durch die MME eine Forward-and-Redirect-Request-Meldung ist, die Meldungsinteraktionseinheit dazu angepasst ist, eine Forward-and-Redirect-Response-Meldung an die MME zu senden, um den Erfolg des Abbildens der netzwerkseitigen Schlüsselkennung anzugeben.

## Revendications

1. Procédé de génération d'un identifiant d'identité de clé lors du transfert d'un équipement d'utilisateur, UE, incluant les étapes ci-dessous dans lesquelles :
lors du transfert d'un équipement UE, d'un réseau d'accès radio terrestre de système universel de télécommunication avec les mobiles, UMTS, évolué, EUTRAN, à un système cible, une entité de gestion de la mobilité, MME, du réseau EUTRAN envoie un identifiant d'identité d'une clé d'entité de gestion de la sécurité d'accès, clé K_{ASME}, KSI_{ASME}, à un noeud de support de service général de radiocommunication en mode paquet, GPRS, de service, SGSN, du système cible (A1, B1), et à la fois le noeud SGSN et l'équipement UE mettent en correspondance l'identifiant KSI_{ASME} avec un identifiant d'identité de clé du système cible ; dans lequel l'étape consiste à mettre en correspondance l'identifiant KSI_{ASME} avec un identifiant d'ensemble de clés, KSI, lorsque le système cible est un réseau d'accès radio terrestre de système UMTS, UTRAN (A2, A3), et à mettre en correspondance l'identifiant KSI_{ASME} avec un numéro de séquence de clé de chiffrement, CKSN, lorsque le système cible est un réseau d'accès radio de service GPRS / débits binaires améliorés pour les GSM de demain, EDGE, GERAN (B2, B3) ;
dans lequel, l'étape dans laquelle l'entité MME du réseau EUTRAN envoie l'identifiant KSI_{ASME} au noeud SGSN du système cible, comprend les étapes ci-dessous dans lesquelles :
l'entité MME génère une clé d'intégrité, IK, et une clé de chiffrement, CK, sur la base de la clé K_{ASME} et envoie l'identifiant KSI_{ASME} conjointement avec la clé IK et la clé CK qui sont générées à partir de la clé K_{ASME}, au noeud SGSN (A1, B1).

2. Procédé de génération selon la revendication 1, dans lequel l'étape de mise en correspondance comprend les étapes ci-dessous consistant à : affecter directement l'identifiant KSI_{ASME} à l'identifiant d'identité de clé du système cible, ou affecter directement la somme de l'identifiant KSI_{ASME} et d'une constante qui est acceptée par l'équipement UE et le réseau à l'identifiant d'identité de clé du système cible.

3. Procédé de génération selon l'une quelconque des revendications 1 à 2, dans lequel les étapes spécifiques sont comme suit, lors du transfert de l'équipement UE dans un état de veille, du réseau EUTRAN au réseau UTRAN :
A1 : suite à la réception d'un message de demande de contexte ou d'un message de demande d'identification, l'entité MME génère la clé IK et la clé CK sur la base de la clé K_{ASME}, et envoie l'identifiant KSI_{ASME} conjointement avec la clé IK et la clé CK qui sont générées à partir de la clé K_{ASME}, au noeud SGSN, par le biais d'un message de réponse de contexte ou d'un message de réponse d'identification ;
A2 : suite à la réception de l'identifiant KSI_{ASME}, de la clé IK et de la clé CK en provenance de l'entité MME, le noeud SGSN met en correspondance l'identifiant KSI_{ASME} avec l'identifiant KSI, et stocke l'identifiant KSI, la clé IK et la clé CK ; et le noeud SGSN envoie un message d'indication d'achèvement de mise en correspondance de l'identifiant KSI à l'équipement UE ; et
A3 : l'équipement UE met en correspondance l'identifiant KSI_{ASME} avec l'identifiant KSI, et stocke l'identifiant KSI conjointement avec la clé IK et la clé CK qui sont générées à partir de la clé K_{ASME}.

4. Procédé de génération selon la revendication 3, dans lequel l'étape A3 est mise en oeuvre au cours d'une quelconque étape après que l'équipement UE décide du transfert vers le réseau UTRAN dans un état de veille, et avant que l'équipement UE n'envoie un message d'achèvement de mise à jour de zone de routage correspondant ou un message d'achèvement de rattachement de zone de routage correspondant au noeud SGSN.

5. Procédé de génération selon l'une quelconque des revendications 1 à 2, dans lequel les étapes spécifiques sont comme suit, lorsque l'équipement UE commute du réseau EUTRAN au réseau UTRAN :
a1 : suite à la réception d'un message de demande de commutation, l'entité MME génère la clé IK et la clé CK sur la base de la clé K_{ASME}, et envoie l' identifiant KSI_{ASME} conjointement avec la clé IK et la clé CK qui sont générées à partir de la clé K_{ASME}, au noeud SGSN, par le biais d'un message de demande d'acheminement et redirection ;
a2 : suite à la réception de l'identifiant KSI_{ASME} conjointement avec la clé IK et la clé CK en provenance de l'entité MME, le noeud SGSN met en correspondance l'identifiant KSI_{ASME} avec l'identifiant KSI, et stocke l'identifiant KSI, la clé IK et la clé CK conjointement ; le noeud SGSN envoie un message de réponse d'acheminement et redirection indiquant l'achèvement de mise en correspondance de l'identifiant KSI à l'entité MME ; et l'entité MME envoie une commande de commutation ordonnant à l'équipement UE de commuter ; et
a3 : suite à la réception de la commande de commutation à partir du réseau, l'équipement UE met en correspondance l'identifiant KSI_{ASME} avec l'identifiant KSI, et stocke l'identifiant KSI conjointement avec la clé IK et la clé CK qui sont générées à partir de la clé K_{ASME}.

6. Procédé de génération selon l'une quelconque des revendications 1 à 2, dans lequel les étapes spécifiques sont comme suit, lors du transfert de l'équipement UE dans un état de veille, du réseau EUTRAN au réseau GERAN :
B1 : suite à la réception d'un message de demande de contexte ou d'un message de demande d'identification, l'entité MME génère la clé IK et la clé CK sur la base de la clé K_{ASME} et envoie l'identifiant KSI_{ASME} conjointement avec la clé IK et la clé CK qui sont générées à partir de la clé K_{ASME}, au noeud SGSN, par le biais d'un message de réponse de contexte ou d'un message de réponse d'identification ;
B2 : suite à la réception de l'identifiant KSI_{ASME}, de la clé IK et de la clé CK à partir de l'entité MME, le noeud SGSN génère une clé de chiffrement, Kc, du réseau GERAN sur la base de la clé IK et de la clé CK, met en correspondance l'identifiant KSI_{ASME} avec le numéro CKSN du réseau GERAN, et stocke le numéro CKSN du réseau GERAN conjointement avec la clé Kc du réseau GERAN ; et le noeud SGSN envoie, à l'équipement UE, un message d'indication d'achèvement de mise en correspondance du numéro CKSN du réseau GERAN ; et
B3 : l'équipement UE met en correspondance l'identifiant KSI_{ASME} avec le numéro CKSN du réseau GERAN, et stocke le numéro CKSN du réseau GERAN conjointement avec la clé Kc du réseau GERAN générée à partir de la clé K_{ASME}.

7. Procédé de génération selon la revendication 6, dans lequel l'étape B3 est mise en oeuvre au cours d'une quelconque étape après que l'équipement UE décide du transfert vers le réseau GERAN dans un état de veille, et avant que l'équipement UE n'envoie un message de commutation au réseau.

8. Procédé de génération selon l'une quelconque des revendications 1 à 2, dans lequel les étapes spécifiques sont comme suit, lors de la commutation de l'équipement UE, du réseau EUTRAN au réseau GERAN :
b1 : suite à la réception d'un message de demande de commutation, l'entité MME génère la clé IK et la clé CK sur la base de la clé K_{ASME}, et envoie l'identifiant KSI_{ASME} conjointement avec la clé IK et la clé CK qui sont générées à partir de la clé K_{ASME}, au noeud SGSN, par le biais d'un message de demande d'acheminement et redirection ;
b2 : suite à la réception de l'identifiant KSI_{ASME} conjointement avec la clé IK et la clé CK à partir de l'entité MME, le noeud SGSN génère une clé Kc du réseau GERAN sur la base de la clé IK et de la clé CK, affecte la valeur de l'identifiant KSI_{ASME} au numéro CKSN du réseau GERAN, et stocke le numéro CKSN du réseau GERAN conjointement avec la clé Kc du réseau GERAN ; le noeud SGSN envoie un message d'indication d'achèvement de mise en correspondance du numéro CKSN du réseau GERAN à l'entité MME ; et l'entité MME envoie une commande de commutation visant à ordonner à l'équipement UE de commuter ; et
b3 : suite à la réception de la commande de commutation à partir du réseau, l'équipement UE met en correspondance l'identifiant KSI_{ASME} avec le numéro CKSN du réseau GERAN, et stocke le numéro CKSN du réseau GERAN conjointement avec la clé Kc du réseau GERAN générée à partir de la clé K_{ASME}.

9. Système destiné à générer un identifiant d'identité de clé lors du transfert d'un équipement UE, incluant un équipement d'utilisateur, UE, une entité de gestion de la mobilité, MME, et un noeud de support de service général de radiocommunication en mode paquet, GPRS, de service, SGSN, dans lequel :
l'entité MME est apte à envoyer un identifiant d'identité d'une clé d'entité de gestion de la sécurité d'accès, clé K_{ASME}, KSI_{ASME}, au noeud SGSN, lors du transfert de l'équipement UE, d'un réseau d'accès radio terrestre de système universel de télécommunication avec les mobiles, UMTS, évolué, EUTRAN, à un système cible (A1, B1) ; et
à la fois le noeud SGSN et l'équipement UE sont aptes à mettre en correspondance l'identifiant KSIA_{SME} avec un identifiant d'identité de clé du système cible, dans lequel l'étape consiste à mettre en correspondance l'identifiant KSI_{ASME} avec un identifiant d'ensemble de clés, KSI, lorsque le système cible est un réseau d'accès radio terrestre de système UMTS, UTRAN (A2, A3), et à mettre en correspondance l'identifiant KSI_{ASME} avec un numéro de séquence de clé de chiffrement, CKSN, lorsque le système cible est un réseau d'accès radio de service GPRS / débits binaires améliorés pour les GSM de demain, EDGE, GERAN (B2, B3) ;
dans lequel, l'entité MME est apte à générer une clé d'intégrité, IK, et une clé de chiffrement, CK, sur la base de la clé K_{ASME} et à envoyer l'identifiant KSI_{ASME} conjointement avec la clé IK et la clé CK qui sont générées à partir de la clé K_{ASME}, au noeud SGSN (A1, B1).

10. Système de génération selon revendication 9, dans lequel le noeud SGSN et l'équipement UE sont aptes à mettre en oeuvre une mise en correspondance en affectant directement l'identifiant KSI_{ASME} à l'identifiant d'identité de clé du système cible, ou en affectant directement la somme de l'identifiant KSI_{ASME} et d'une constante qui est acceptée par l'équipement UE et le réseau, à l'identifiant d' identité de clé du système cible.

11. Système de génération selon la revendication 9, dans
lequel l'équipement UE et le noeud SGSN sont en outre aptes à supprimer une clé stockée avant un transfert lorsque l'équipement UE et le noeud SGSN ont convenu d'une clé avant le transfert et lorsqu'un identifiant d'identité de clé d'un système cible est le même que l'identifiant d'identité de clé du système cible, converti à partir de l'identifiant KSI_{ASME} au cours du transfert.

12. Système de génération selon l'une quelconque des revendications 9 à 11, dans lequel
l'équipement UE comprend une unité d'interaction de messages, une unité de mise en correspondance d'identifiants de clés et une unité de stockage de clé et d'identifiant de clé ;
l'unité d'interaction de messages est apte à recevoir un message en provenance d'un côté de réseau ;
l'unité de mise en correspondance d'identifiants de clés est apte à mettre en correspondance l'identifiant KSI_{ASME} avec un identifiant d'identité de clé d'un système cible lorsque l'unité d'interaction de messages reçoit une commande de commutation, un message d'acceptation de mise à jour de zone de routage ou un message d'acceptation de rattachement de zone de routage ; et
l'unité de stockage de clé et d'identifiant de clé est apte à stocker une clé d'un système cible et un identifiant d'identité de clé du système cible, conjointement ;
l'entité MME comprend une unité de réception de message de demande et une unité de traitement de paramètres de sécurité ;
l'unité de réception de message de demande est apte à recevoir des messages de demande de transfert en provenance d'autres entités de réseau et à ordonner à l'unité de traitement de paramètres de sécurité de traiter ces messages ; et
l'unité de traitement de paramètres de sécurité est apte à générer la clé CK et la clé IK à partir de la clé K_{ASME} et à envoyer l'identifiant KSI_{ASME} conjointement avec la clé IK et la clé CK qui sont générées à partir de la clé K_{ASME}, au noeud SGSN, suite à la réception de l'instruction en provenance de l'unité de réception de message de demande ;
le noeud SGSN comprend une unité de traitement de paramètres de sécurité, une unité d'interaction de messages, une unité de mise en correspondance d'identifiants de clés et une unité de génération de clés ;
l'unité de réception de paramètres de sécurité est apte à recevoir les clés et l'identifiant KSI_{ASME} en provenance de l'entité MME, à envoyer l'identifiant KSI_{ASME} à l'unité de mise en correspondance d'identifiants de clés, à acquérir la clé du système cible sur la base des clés envoyées par l'entité MME, et à l'envoyer à l'unité de stockage de clé et d'identifiant de clé ;
l'unité de mise en correspondance d'identifiants de clés est apte à mettre en correspondance l'identifiant KSI_{ASME} avec un identifiant d'identité de clé du système cible, suite à la réception de l'identifiant KSI_{ASME} ;
l'unité de stockage de clé et d'identifiant de clé est apte à stocker à la fois la clé du système cible envoyée par l'unité de réception de paramètres de sécurité et l'identifiant d'identité de clé du système cible envoyé par l'unité de mise en correspondance d'identifiants de clés, et à notifier, à l'unité d'interaction de messages, l'achèvement de mise en correspondance, à l'issue du stockage ; et
l'unité d'interaction de messages est apte à envoyer une notification de réussite de mise en correspondance de l'identifiant de clé de côté de réseau, suite à la réception du message d'achèvement de mise en correspondance.

13. Système de génération selon la revendication 12, dans lequel
l'unité de réception de paramètres de sécurité dans le noeud SGSN est apte à acquérir la clé du système cible sur la base des clés envoyées par l'entité MME, et est apte à l'envoyer à l'unité de stockage de clé et d'identifiant de clé, dans lequel, lorsque le système cible est un réseau UTRAN, les clés envoyées par l'entité MME sont envoyées à l'unité de stockage de clé et d'identifiant de clé ; et lorsque le système cible est un réseau GERAN, les clés envoyées par l'entité MME sont utilisées en vue de générer une clé Kc du réseau GERAN qui est envoyée à l'unité de stockage de clé et d'identifiant de clé.

14. Système de génération selon la revendication 12, dans
lequel l'unité de mise en correspondance d'identifiants de clés dans l'équipement UE est en outre apte à mettre en correspondance l'identifiant KSI_{ASME} avec l'identifiant d'identité de clé du système cible lorsque l'équipement UE décide d'un transfert dans un état de veille.

15. Système de génération selon la revendication 12, dans
lequel
l'unité d'interaction de messages dans l'équipement UE est en outre apte à envoyer un message de demande de mise à jour de zone de routage ou un message de demande de rattachement de zone de routage, au noeud SGSN, lorsque l'équipement UE décide d'un transfert dans un état de veille ;
l'unité d'interaction de messages dans le noeud SGSN est en outre apte à envoyer un message de demande de contexte correspondant ou un message de demande d'identification correspondant, à l'entité MME, suite à la réception du message de demande de mise à jour de zone de routage ou du message de demande de rattachement de zone de routage ;
l'unité de réception de message de demande dans l'entité MME est en outre apte à envoyer une première instruction de traitement, à l'unité de traitement de paramètres de sécurité, si le message de demande de transfert correspond à un message de demande de contexte ou à un message de demande d'identification, et l'unité de réception de message de demande est apte à envoyer une seconde instruction de traitement, à l'unité de traitement de paramètres de sécurité, si le message de demande de transfert correspond à un message de demande de commutation ; et
l'unité de traitement de paramètres de sécurité dans l'entité MME est apte à envoyer l'identifiant KSI_{ASME} conjointement avec la clé IK et la clé CK qui sont générées à partir de la clé K_{ASME}, au noeud SGSN, par le biais d'un message de réponse de contexte ou d'un message de réponse d'identification, suite à la réception de la première instruction de traitement, et l'unité de traitement de paramètres de sécurité est apte à envoyer l'identifiant KSI_{ASME} conjointement avec la clé IK et la clé CK qui sont générées à partir de la clé K_{ASME}, au noeud SGSN, par le biais d'un message de demande d'acheminement et redirection, suite à la réception de la seconde instruction de traitement.

16. Système de génération selon la revendication 15, dans
lequel l'unité d'interaction de messages dans le noeud SGSN est apte à envoyer une notification de réussite de mise en correspondance de l'identifiant de clé de côté de réseau, dans lequel, si le message concernant l'envoi de la clé et de l'identifiant de clé par l'entité MME correspond à un message de réponse de contexte ou à un message de réponse d'identification, alors l'unité d'interaction de messages est apte à envoyer un message d'acceptation de mise à jour de zone de routage ou un message d'acceptation de rattachement de zone de routage, à l'équipement UE, en vue d'indiquer la réussite de la mise en correspondance de l'identifiant de clé de côté de réseau ; et si le message concernant l'envoi de la clé et de l'identifiant de clé par l'entité MME correspond à un message de demande d'acheminement et redirection, alors l'unité d'interaction de messages est apte à envoyer un message de réponse d'acheminement et redirection à l'entité MME, en vue d'indiquer la réussite de la mise en correspondance de l'identifiant de clé de côté de réseau.
